# EUROPÄISCHE PATENTSCHRIFT

(11) **EP 2 585 330 B1**
(45) Veröffentlichungstag und Bekanntmachung des Hinweises auf die Patenterteilung: **15.07.2015**
(21) Anmeldenummer: 11733569.5
(22) Anmeldetag: 27.06.2011
(51) Int. Cl.: B60K 17/16, B60K 23/04

(54) **GETRIEBE-ANORDNUNG**
GEAR ASSEMBLY
SYSTÈME DE TRANSMISSION

(30) Priorität: 28.06.2010 DE 102010025274
(43) Veröffentlichungstag der Anmeldung: 01.05.2013
(73) Patentinhaber: Müller, Werner, 79848 Bonndorf (DE)
(72) Erfinder: Müller, Werner, 79848 Bonndorf (DE)
(74) Vertreter: Börjes-Pestalozza, Henrich
(86) Internationale Anmeldenummer: PCT/EP2011/003144
(87) Internationale Veröffentlichungsnummer: WO 2012/000633

(56) Entgegenhaltungen:
- EP-A1- 0 167 043
- DE-A1-102009 020 089
- GB-A- 2 394 262
- US-A- 4 126 994
- US-A- 4 471 669
- BESSON B: "DOUBLE EPICYCLE A GLISSEMENT CONTROLE APPLICATION A LA TRACTION DESVEHICULES DOBLE EPICYCLE TO CONTROL SLIP: IMPLEMENTATION ON DRIVE-TRAINS", INGENIEURS DE L'AUTOMOBILE, EDITIONS VB, GARCHES, FR, Nr. 649, 1. Juni 1989 (1989-06-01), Seiten 104-107, XP000068986, ISSN: 0020-1200

## Beschreibung

Die Erfindung betrifft eine Getriebe-Anordnung, die am Antriebsstrang eines ein- oder mehrachsigen Landfahrzeugs, insbesondere eines Nutzfahrzeugs, oder dergleichen Fortbewegungsmittels angeordnet ist, von welchen Achsen wenigstens eine angetrieben ist, wobei den Achshälften einer angetriebenen Achse jeweils wenigstens ein Planetentrieb zugeordnet ist und mit wenigstens einer Sensoreinrichtung zur Erfassung einer Lenkmanipulation an dem Fahrzeug, sowie mit einer Steuereinrichtung, wobei die Planetentriebe durch die Steuereinrichtung anhand von aus den Lenkmanipulationsdaten errechneten Werten derart steuerbar sind, dass jedes der betreffenden, an der jeweiligen Achshälfte angeordneten Räder mit einer Drehzahl angetrieben wird, bei welcher es schlupffrei abrollt. So eine Getriebe-Anordnung ist aus der DE 102009020089 A bekannt.

Solche Getriebeanordnungen sind insbesondere aus dem Bereich der Nutzfahrzeuge mit Antriebsleistungen im Bereich größer 100 kW, beispielsweise bei landwirtschaftlichen Fahrzeugen, Schleppern oder Baumaschinen bekannt, wobei bei den betreffenden Fahrzeugen der Planetentrieb in den angetriebenen Achsen als Untersetzungsgetriebe mit starrer Untersetzung Verwendung findet, bei dem durch das Sonnenrad angetrieben und über den Planetenträger die mit diesem fest verbundene Abtriebswelle abgetrieben wird.

Eine solche Getriebeanordnung, die eine Verbindung zwischen dem Antriebsmotor und den anzutreibenden Rädern des Landfahrzeugs herstellen und steuern soll, ist beispielsweise aus der DE 41 38 074 A1 bekannt, mit welcher ein steuerbares Differenzial realisiert wird. An der vorbekannten Getriebeanordnung kann es jedoch unter Umständen nachteilig sein, dass ein relativ hoher Einsatz mechanischer, bewegte Teile notwendig ist, die sich zudem potentiell gefährdet überwiegend im Rotationsbereich dieses Verzweigungsgetriebes befinden. Das Gesamtsystem muss überdies intern abgedichtet werden, wodurch eine den Volumenausgleich an Flüssigkeit kompensierende Einrichtung bereitgestellt werden muss, die den Volumenausgleich der Flüssigkeit kompensiert, welche selbst wiederum eine interne Abdichtung erfordert. Bei Beabstandung eines im Rotationsbereich befindlichen, schieberartigen Steuerelements von der Steuereinrichtung außerhalb des Rotationsbereiches sind zudem auch mechanischen Verbindungen zwischen dem in der DE 41 38 074 A1 genannten Schrittmotor und dem Steuerelement notwendig, die auf in der Praxis auftretende Steuerungenauigkeiten schließen lassen.

Weiter kennt man aus der DE 103 48 959 A1 eine Getriebe-Anordnung, die am Antriebsstrang eines mehrachsigen Fahrzeugs angeordnet ist, wobei den Achshälften einer angetriebenen Achse jeweils wenigstens ein Planetentrieb zugeordnet ist und bei welcher eine Steuereinrichtung Bremsen ansteuert, um die Drehzahl der Räder zu steuern. Hierbei werden sie Relativbewegungen innerhalb einer Achse über mindestens zwei dreiwellige Planetentriebe und ein Kupplungssystem ausgeglichen, so dass die Getriebevorrichtung praktisch einem mechanischen Differenzial gleichkommt und auch nur einachsig wirksam ist.

Schließlich kennt man aus dem Nutzfahrzeugbereich Zusatzausstattungen dieser Fahrzeuge, wie zum Beispiel einer Mischeinrichtung, einer Drehplattform oder einem Hebezeug mit vollständig hydraulischem Antrieb und jeweils einem zugeordneten Untersetzungsgetriebe aus der US 6 102 824 A.

Außerdem kennt man aus der GB 2 394 262 A auch noch ein Kupplungssystem. Bei einer Änderung des Relativverhaltens der Räder einer Achse eines Fahrzeugs muss bei einem solchen Kupplungssystem jedoch mindestens eine Kupplung durchrutschen, nach Einleiten des entsprechenden Vorgangs ist das Drehmoment der Kupplung ständig zu überwachen, um bei einer Drehmomentänderung der Achse auch das Reibmoment verändert anpassen zu können. Kleine Veränderungen innerhalb einer Achse sind hierbei steuerungsseitig nicht einfach zu beherrschen und auch nur sehr grob manipulierbar, außerdem entsteht ein erheblicher Aufwand hinsichtlich der notwendigen Sensorik. Im Übrigen ist vermittels der wirksamen unterschiedlichen Drehmomente auch noch ein Einfluss unterschiedlicher Reibungskoeffizienten an den Radaustandflächen auf das Kupplungssystem feststellbar.

Es ist daher die Aufgabe der vorliegenden Erfindung, eine Getriebeanordnung zur Verfügung zu stellen, die mit geringem Aufwand sowohl eine sichere, einfach aufgebaute Verbindung zwischen Antriebsmotor und angetriebenen Rädern herstellt als auch beim Antrieb wie bei der Verzögerung eine zuverlässige Steuerung der betreffenden Räder hinsichtlich Drehzahl und Drehmoment ermöglicht und so einen steuerbaren Drehzahlausgleich bei Kurvenfahrt realisiert und die bei insbesondere bei Fahrzeugen mit einem hohen Achsdrehmoment, den Durchmesser sowie die Baugröße des Verzweigungsgetriebes erheblich zu reduziert.

Die Aufgabe wird gelöst durch eine Vorrichtung nach Patentanspruch 1. Weiterbildungen der Vorrichtung sind Gegenstand der Unteransprüche.

Damit ist erfindungsgemäß eine Getriebeanordnung gebildet, bei welcher die Achshälften direkt, gleichlaufend angetrieben sind und die Planetentriebe durch die Steuereinrichtung anhand von aus den Lenkmanipulationsdaten errechneten Werten derart steuerbar sind, dass jedes der betreffenden, an der jeweiligen Achshälfte angeordneten Räder mit einer Drehzahl angetrieben wird, bei welcher es unter Beibehaltung des Drehmoments schlupffrei abrollt, wodurch bei der erfindungsgemäßen Getriebeanordnung über die an dem jeweiligen Planetentrieb angeordneten Planetensätze jedes angetriebene Rad einzeln hinsichtlich der Drehzahl und des Drehmoments gesteuert und unabhängig von verschiedenen Reibungskoeffizienten zwischen Reifen und deren Aufstandsflächen angetrieben bzw. verzögert wird, wofür die Steuereinrichtung der Getriebeanordnung eine manipulierbare Hydrostatikeinrichtung aufweist, über welche die Bewegung jedes der Planetenträgers und damit der Planetentriebe der zu den Rädern geführten Abtriebswellen in geeigneter Weise möglich ist.

Eine mit einer Drehzahlerniedrigung ansonsten verbundene Drehmomenterhöhung wird bei gleichbleibendem Drehmoment erfindungsgemäß über die Hydrostatikeinrichtung durch hydraulische Verlustleistung ausgeglichen. Das Vorgesagte gilt in gleicher Weise natürlich auch bei mehreren angetriebenen Achsen und damit auch bei allradgetriebenen Fahrzeugen, bei denen dann das Längsdifferential entfallen kann.

Die erfindungsgemäße Getriebeanordnung zeichnet sich demnach dadurch aus, dass die etwa beim Durchfahren einer Kurve erforderliche Drehzahldifferenz der Räder einer oder mehrerer Achsen oder eines Achsstranges nicht durch die unterschiedlich wirkenden Drehmomente über ein Ausgleichsgetriebe, also ein Differenzial, ausgeglichen wird, sondern über nach einer Verzweigung angeordnete, gesteuerte Planetengetriebe, die die weiterführenden Antriebswellen, denen ein oder mehrere Räder zugeordnet sind, einzeln antreiben oder abbremsen, wobei die Räder differentialfrei und gleichlaufend, also starr bzw. gleichsinnig angetrieben sind. Bei einem Lenkeinschlag werden dabei die von den einzelnen Rädern zu durchlaufenden Wegstrecken berechnet und die Drehzahl der kurveninneren Räder werden um den Wert reduziert, der jedem Rad ein schlupffreies Abrollen unter Beibehaltung des Drehmoments und der erfindungsgemäßen Beeinflussung des Lenkverhaltens und der Fahrstabilität ermöglicht, wodurch die energie- und produktionswirtschaftliche Bilanz eines mit einer solchen Getriebeanordnung versehenen Fahrzeugs gleich der eines mechanischen Antriebs ist. Die relativen Veränderungen der Raddrehzahlen sind immer das Ergebnis errechneter Werte. Sie sind unabhängig von den unterschiedlichen Reibungskoeffizienten. Die Einrichtung macht die Verwendung eines sogenannten Differenzials überflüssig und gibt den bisher benötigten Bauraum für andere Verwendungen frei. Dieser Vorteil wiegt besonders bei sogenannten System- und bei Wannenfahrzeugen. Unter Lenkmanipulation kann nicht nur ein Lenkeinschlag und die damit verbundene Winkeländerung, sondern jegliche durch Manipulation erfolgte, sensorisch erfassbare Änderung des Lenkzustands, also auch eine Änderung der Drehzahl oder des Drehmoments verstanden sein.

Hierbei kann die Steuereinrichtung der erfindungsgemäßen Getriebeanordnung gemäß einer Weiterbildung mit wenigstens einem Steuerelement, insbesondere einem Proportionalventil zur Steuerung des Kreislaufs eines hydraulischen Steuermittel, versehen sein, welches die Zufuhr und den Abfluss des als Hydraulikfluid ausgebildeten Steuermittels aus bzw. zu einem Fluidvorrat steuert.

Eine platzsparende Bauform einer Getriebeanordnung wird mit einer Ausführung erreicht, bei der der Planetentrieb abtriebsseitig einer Getriebeverzweigung des Antriebsstrangs an der angetriebenen Achshälfte angeordnet ist, da hierbei hohe Drehmomente radnah erzeugt werden und so Getriebe und Verzweigung entsprechend weniger voluminös vorgesehen sein können.

Um alle angetriebenen Räder eines Fahrzeugs mittels der Steuereinrichtung hinsichtlich Drehzahl und Drehmoment in dem jeweiligen Fahrzustand manipulieren zu können ist es gemäß einer vorteilhaften Weiterbildung der Getriebeanordnung vorgesehen, diese mit jeweils wenigstens einem Planetentrieb pro Achshälfte zu versehen.

Zur Aufrechterhaltung eines sicheren Betriebs der Getriebeanordnung an dem betreffenden Landfahrzeug ist es von Vorteil, bei einer Ausführung das wenigstens einen Steuerelement der Steuereinrichtung von dem gesteuerten Planetentrieb beabstandet anzuordnen, so dass es sich nicht im Rotationsbereich des Planetentriebs befindet.

Bei einer einfach herzustellenden und gut handhabbaren Ausführung der Getriebeanordnung kann an dem Planetentrieb ein rotierendes Steuerglied mit geschlossener Kontur angeordnet sein, das mit sich abwechselnden konvex und konkav gekrümmten Gliedabschnitten, die Nocken und Hubtäler bilden, versehen ist, welche insbesondere eine elliptische Krümmung aufweisen. Eine mit der betreffenden Kontur des Steuerglieds zu beaufschlagende Fläche wird sich auf diese Weise an den mit ihrer wechselnden Krümmung quasi ineinander übergehenden Gliedabschnitten in einer kontinuierlichen Bewegung abrollen können, so dass mittels des Steuerglieds ein ruckelfreie, flüssige Bewegung vermittelt werden kann.

Gemäß einer bevorzugten Weiterbildung ist an der Getriebeanordnung das Steuerglied des Planetentriebs drehfest als ringförmiger axialer Abschnitt eines rotierenden Trägers vorgesehen, dessen Rotation eine Mehrzahl von insbesondere mit dem gleichen Winkel beabstandeten Kolben-Zylinder-Anordnungen der Hydrostatikeinrichtung antreibt. Hierbei kann ein dem Steuerglied zugewandter Endabschnitt des beweglichen Kolbens einer Kolben-Zylinder-Anordnung zweckmäßigerweise auf der Konturfläche des ringförmigen axialen Abschnitts des Trägers ablaufen, wobei axial hier bedeutet, dass der Abschnitt eine der dem Planetentrieb zugeführten oder von ihm weggeführten Wellen über einen Teil ihrer Längserstreckung umgreift. Durch seine Rotation verursacht der ringförmige axiale Steuerabschnitt mit seiner abwechselnden Abfolge von Nocken und Hubtälern eine radiale Bewegung der Kolben in ihren Zylindern.

Eine andere zweckmäßige Weiterbildung der Getriebeanordnung kann darin bestehen, dass der axiale Abschnitt an dem Träger koplanar oder axial versetzt zu dem Hohlrad des Planetentriebs angeordnet ist.

Besonders bevorzugt ist bei einer anderen Weiterbildung der Getriebeanordnung der Träger durch das Hohlrad oder einen Planetenträger gebildet, insbesondere kann hierbei das Hohlrad selbst mit dem ringförmigen axialen Steuerabschnitt als Außenkontur versehen sein, welche sich in einem das Hohlrad umgreifenden Gehäuse bewegt. Die Nocken und Hubtäler sind bei diesen Weiterbildungen also an dem ringförmigen axialen Steuerabschnitt radial nach innen oder außen gewandt, beispielsweise nach außen wie bei dem beschriebenen Hohlrad oder etwa nach innen an einem Abschnitt des Planetenträgers.

Um an den abwechselnden Nocken und Hubtälern des Steuerabschnitts gut und insbesondere auch gleichmäßig abrollen zu können, kann es in einer besonders bevorzugten Ausführung der Getriebeanordnung vorgesehen sein, die Kolben als Rollenkolben auszubilden, wobei die den Steuerabschnitt beim Abrollen berührende Linie der Zylinderfläche der betreffenden Rolle insbesondere jeweils einen rechten Winkel mit den Flächenrändern bildet. Dabei sind also die Stirnflächen der Rolle parallel zu den Stirnflächen des Trägers oder des Steuerabschnitts angeordnet, so dass die betreffende Rolle mit dem ihr zugewandeten Abschnitt der Kontur des axialen Abschnitts in bestmöglichem Kontakt steht und an diesem abrollen kann.

Ein gleichmäßiger Förderstrom an hydraulischem Fluid zum Betrieb der manipulierbaren Hydrostatikeinrichtung wird mit einer Ausführung der Getriebeanordnung erreicht, bei der die Anzahl der Kolben-Zylinder-Anordnungen diejenige der Nocken um zwei übersteigt.

Der Planetentrieb und die Kolben-Zylinder-Anordnungen sind bei einer Ausführungsform der Getriebeanordnung einfach gegeneinander bewegbar, bei der die Kolben-Zylinder-Anordnungen in einem ringscheibenförmigen oder scheibenförmigen Gehäuse aufgenommen sind, welches das Steuerglied einfasst bzw. von diesem eingefasst ist, so dass eine koaxiale Anordnung dieser beiden Teile gebildet ist.

Dabei kann in einer vorteilhaften Weiterbildung der Getriebeanordnung der Träger mit einem insbesondere scheibenartigen, ebenen Boden vorgesehen sein, welcher an einer Seite die Planetenräder des Planetentriebs trägt, während der an dem Rand des Bodens angeordnete Steuerabschnitt von der anderen Bodenseite absteht.

In einer zweckmäßigen, da platzsparenden Weiterbildung der Getriebeanordnung, bei der die zu- oder abgeführte Welle vorteilhaft unterbringbar ist, ist an dem Boden des Trägers eine zentrale Öffnung vorgesehen, durch welche ein Abschnitt von Antriebs- oder Abtriebswelle gesteckt ist.

Eine gut handhabbare Steuerung der manipulierbaren Hydrostatikeinrichtung weist eine Ventilanordnung auf, bei der die dem Träger abgewandten Zylinderböden der Kolben-Zylinder-Anordnungen über je ein Saug- bzw. ein Druckventil mit jeweils einer Saug- und einer Druckseite einer das Gehäuse umlaufenden Transporteinrichtung des Hydraulikfluids verbindbar sind.

Besonders einfach zu verwirklichen ist eine andere Weiterbildung der Getriebeanordnung, bei der die Transporteinrichtung durch wenigstens einen jedem Saugventil und einen jedem Druckventil zugeordneten Ringkanal an dem Gehäuse oder durch Hydraulikleitungen gebildet ist, wobei die Kanäle oder Leitungen das Gehäuse randseitig umlaufen können.

Bei einer anderen zweckmäßigen Weiterbildung, bei der die Zylinder gut gefüllt werden und überdies die Rollenkolben sicher an die ihnen zugeordnete Abrollfläche an der Außenkontur des axialen Abschnitts gedrückt werden, kann der Ringkanal der Saugseite, also der Saugkanal, mit einer Niederdruckversorgung des Hydraulikfluids verbunden sein. Ist der Saugkanal lediglich mit einem Fluidvorrat verbunden, kann unter Umständen zum Nachsaugen von Fluid im Zylinderraum der Kolben ein zusätzliches Federmittel angeordnet werden, um die Kolbenbewegung in Richtung des die Kolben bewegenden Hubrings zu unterstützen. Bei einer solchen Konstellation kann die Rücklaufmenge an Hydraulikfluid an dem Proportionalventil vorteilhaft direkt wieder der Saugseite zugeführt werden, so dass mittels der Federn nicht etwa die komplette abgeführte Fluidmenge durch nachgesaugt werden müsste, sondern lediglich durch Quetschverluste verursachte Fehlmengen über ein Nachsaugventil zu kompensieren wäre. Gegenüber anderen denkbaren, in mancher Konstellation auch notwendigerweise veränderten Fluidversorgungen ist bei Befüllung des Systems mit einer Niederdruckversorgung jedenfalls eine dauernde Versorgung mit frischem, gekühlten und gefilterten Fluid realisierbar.

In einer zweckmäßigen, den unerwünschten Austritt des hydraulischen Fluids und damit auch einen Druckverlust vermindernden Weiterbildung ist an der Getriebeanordnung das Gehäuse der Kolben-Zylinder-Anordnungen in einer Aufnahme eines Achs- oder Getriebegehäuses derart angeordnet, dass deren Wand die nutartigen Ringkanäle gegeneinander abdichtet. Darüber hinaus können aber auch noch weitere, in entsprechenden Aufnahmen unterzubringende Dichtmittel an dem Gehäuse vorgesehen sein.

Um den Rücklauf des Steuermittels in den Fluidvorrat sicherstellen oder das Steuermittel anderweitig beispielsweise auch Schmierzwecken zur Verfügung stellen zu können, ist bei einer weiteren Ausbildung der Getriebeanordnung das Gehäuse der Kolben-Zylinder-Anordnungen in einem Bereich seines Umfangs auf der Druckseite mit dem Steuerelement verbunden, was über das zur Unterbringung der Kolben-Zylinder-Anordnungen erwähnte Getriebegehäuse geschehen kann. Das Steuerelement kann zum Beispiel mit dem Lenkungsrücklauf des Fahrzeugs verbunden sein, was aufgrund von dessen Ansaugmittel im Kreislauf eine praktisch durchgängige Fluidversorgung garantiert.

Eine zweckmäßige Weiterbildung der Erfindung, welche einfach aufgebaut an den Rädern einzeln eine Fluidversorgung ermöglicht, kann darin bestehen, dass die Kolben-Zylinder-Anordnungen jeweils mit wenigstens einem mechanischen Stellmittel zur Unterstützung der Bewegung der Kolben in Richtung auf das Hohlrad versehen sind, so dass Fluid-Fehlmengen ohne eine weitere Fluidpumpe nachgesaugt werden können. Dieses Stellmittel kann beispielsweise als den Kolben in seinem Zylinder bewegende Feder ausgebildet sein.

Dabei kann es, abhängig von Fahrt- und Umgebungsbedingungen, bei einer anderen Ausführung der Getriebeanordnung weiter von Vorteil sein, mit der Transporteinrichtung des Hydraulikfluids eine Kühleinrichtung und/oder ein Reinigungseinrichtung zu verbinden, so dass das Hydraulikfluid etwa gekühlt oder gefiltert werden kann.

In einer anderen vorteilhaften Ausführungsform der Getriebenordnung können die Planetentriebe der beiden Achshälften einer angetriebenen Achse mit der zugeordneten Hydrostatikeinrichtung mit Steuerelement in unmittelbarer Umgebung eines den Achshälften zuordenbaren Achsverzweigungsgetriebes angeordnet sein, so dass diese Getriebeanordnung eine sehr kompakte, geschlossene Einheit bildet, deren Funktionalität ansonsten aber der vorbeschriebenen entspricht.

Die kompakte Bauform dieser Ausbildung der Getriebeanordnung kann dadurch erreicht werden, dass beispielsweise die Sonnenräder der Planetentriebe mit einem benachbarten Tellerrad des Antriebs in einer Wirkverbindung stehen, wobei insbesondere eines der Sonnenräder mit dem Tellerrad einstückig ausgebildet sein kann.

In einer anderen, ebenfalls der kompakten Bauform der Getriebeanordnung zuträglichen Ausbildung der Getriebeanordnung können die Planetenräder der Planetentriebe mit einem Planetenträger verbunden sein, welcher wiederum mit der dem jeweiligen Planetentrieb zugeordneten Abtriebswelle drehfest verbunden ist, insbesondere mit dieser einstückig ausgebildet ist.

Um bei deaktivierter oder stromloser Hydrostatikeinrichtung ein sich an Hohlrädern während der Fahrt eventuell aufbauendes Drehmoment abstützen zu können, kann bei einer anderen Weiterbildung der Getriebeanordnung an dieser ein über ein Schaltmittel zuschaltbares Ausgleichsgetriebe angeordnet sein, wobei die Zuschaltung selbst ggf. durch eine zugeordnete Steuereinrichtung regulierbar ist.

Vorteilhafterweise kann in diesem Fall das Ausgleichsgetriebe eine mit den Hohlrädern der Planetentriebe in Wirkverbindung stehende Vorgelegewelle aufweisen, so dass ein mechanischer Ausgleich des Drehmoments erfolgen kann.

Eine einfache Bedienbarkeit des zuschaltbaren Ausgleichsgetriebes ist bei einer Ausführung der Getriebeanordnung gewährleistet, bei der das Schaltmittel als Kupplung, insbesondere als eine Klauen- oder eine Reibkupplung, oder als eine weitere Hydrostatikeinrichtung vorgesehen ist.

Die Erfindung wird nachstehend anhand von Ausführungsbeispielen in der Zeichnung näher erläutert. Dabei zeigen in teilweise schematisierter Darstellung die
- Fig.1: eine Draufsicht auf die schematisierten Abrollwege angetriebener Räder eines mit der erfindungsgemäßen Getriebeanordnung versehenen Landfahrzeugs;
- Fig.2: eine ebene Seitenansicht eines ersten Ausführungsbeispiels der Getriebeanordnung mit manipulierbarer Hydrostatikeinrichtung und mit einem an einem Träger angeordneten Steuerglied;
- Fig.3: eine geschnittene Seitenansicht der Getriebeanordnung aus der Fig.2 entlang der Schnittlinie III-III;
- Fig.4: eine geschnittene Seitenansicht der Getriebeanordnung der Fig.3 entlang der Schnittlinie IV-IV;
- Fig.5: eine detaillierte Schnittansicht als ebene Seitenansicht des eingekreisten Bereichs V der Getriebeanordnung aus der Fig.3;
- Fig.6: eine schematisierte Ansicht des Fluidkreislaufs an der Getriebeanordnung mit einem Kolben einer Kolben-Zylinder-Anordnung, Ventilen sowie einem den Kreislauf steuernden Steuerelement;
- Fig.7, 8: zwei perspektivische Seitenansichten einer Vorder- und einer Rückseite eines weiteren Ausführungsbeispiels der Getriebeanordnung mit als Planetenträger ausgebildetem Träger mit axialem Steuerabschnitt;
- Fig.9: eine perspektivische Seitenansicht eines weiteren Ausführungsbeispiels der Getriebeanordnung mit an dem Hohlrad als Träger angeordnetem Steuerabschnitt;
- Fig.10: eine schematisierte, vereinfachte Ansicht des Fluidkreislaufs an einer Getriebeanordnung mit vier Rollenkolben und Steuerglied;
- Fig.11: eine Draufsicht von oben auf den Antriebsstrang eines sechsrädrigen, allradgetriebenen Fahrzeugs mit einem Ausführungsbeispiel der erfindungsgemäßen Getriebeanordnung;
- Fig.12: eine Seitenansicht eines weiteren Ausführungsbeispiels einer erfindungsgemäßen Getriebeanordnung, in welchem diese in der Umgebung des Achsverzweigungsgetriebes angeordnet ist;
- Fig.13: eine teilgeschnittene Seitenansicht der Getriebeanordnung aus der Fig.12 entlang der Schnittlinie XIII-XIII
- Fig.14: eine perspektivische, teilgeschnittene Seitenansicht eines weiteren Ausführungsbeispiels einer Getriebeanordnung mit zuschaltbarem Ausgleichsgetriebe und Schaltmittel;
- Fig.15: eine schematisierte Ansicht des Fluidkreislaufs der Getriebeanordnung aus der Fig.12 und 13;
- Fig.16: eine schematisierte Ansicht des Fluidkreislaufs der Getriebeanordnung aus der Fig.14.

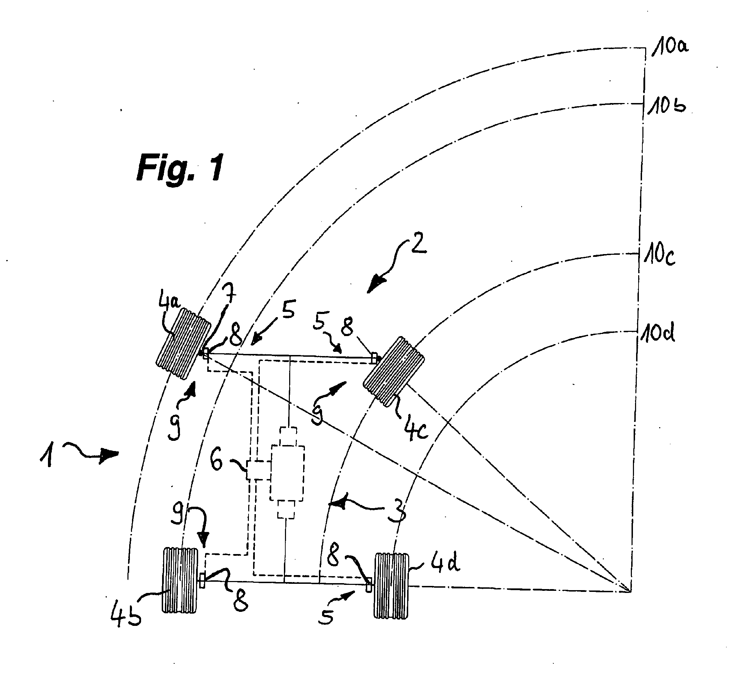

In der Fig.1 ist zunächst ein Landfahrzeug 2 zu erkennen, an welchem dessen vier Räder 4 a, b, c, d durch einen Antrieb 3 an den achshälftigen Antriebswellen 5 jeweils direkt, also differenzialfrei angetrieben sind, die Verbindung zwischen dem Antrieb 3 und den Rädern 4 wird dabei durch eine im Ganzen mit 1 bezeichnete Getriebeanordnung hergestellt. Das Fahrzeug 2 der Fig.1 ist ein Fahrzeug ohne Verzweigungsgetriebe, es werden die Achshälften der Vorder- und Hinterachse über nicht weiter dargestellte Kegelräder als Antriebsmittel in einer starren Abhängigkeit angetrieben. Bei einer Kurvenfahrt werden jedoch, wie ebenfalls in der Fig. 1 zu erkennen ist, vier verschiedene Ablauflinien 10a-10d der Räder 4a-4d durchfahren, die entsprechend vier verschiedene Raddrehzahlen erfordern.

Diese Getriebeanordnung 1 weist eine Steuereinrichtung 6 und eine Sensoreinrichtung 7 auf, überdies ist an der Getriebeanordnung pro Achshälfte je ein Planetentrieb 8 angeordnet, wodurch jedes der antreibbaren Räder 4 einzeln angetrieben bzw. verzögert wird, wobei die Steuereinrichtung 6 anhand von durch die Sensoreinrichtung 7 erfassten, und durch Lenkmanipulation bei der Fortbewegung des Fahrzeugs 2 verursachten Werten die Planetensätze 9 der Planetentriebe 8 derart steuert, dass jedes Rad 4a-4d mit einer Drehzahl angetrieben wird, bei welcher es unter Beibehaltung des Drehmoments schlupffrei abrollt. In der Fig.1 ist nur die für die gezeigte Kurvenfahrt relevante Sensoreinrichtung 7 als Lenkwinkelsensor 7 des kurvenäußeren Rades 4a gezeigt.

Bei der in der Fig.1 erkennbaren Fahrt des Fahrzeugs 2 in eine Rechtskurve zeichnet sich die erfindungsgemäße Getriebeanordnung 1 dadurch aus, dass die beim Durchfahren der Kurve erforderliche Drehzahldifferenz der Räder 4 einer oder mehrerer Achsen oder eines Achsstranges nicht durch die unterschiedlich wirkenden Drehmomente über ein Ausgleichsgetriebe, also ein Differenzial, ausgeglichen wird, sondern über nach der Verzweigung angeordnete, gesteuerte Planetengetriebe 8, die die weiterführenden Antriebswellen 5, denen ein oder mehrere Räder 4 zugeordnet sind, einzeln antreiben oder abbremsen. Bei einem Lenkeinschlag werden dabei die von den einzelnen Rädern zu durchlaufenden Wegstrecken 10a, 10b, 10c und 10d berechnet und die Drehzahl der kurveninneren Räder 4b, 4c und 4d werden um denjenigen Wert reduziert, der jedem Rad 4 ein schlupffreies Abrollen unter Beibehaltung des Drehmoments ermöglicht.

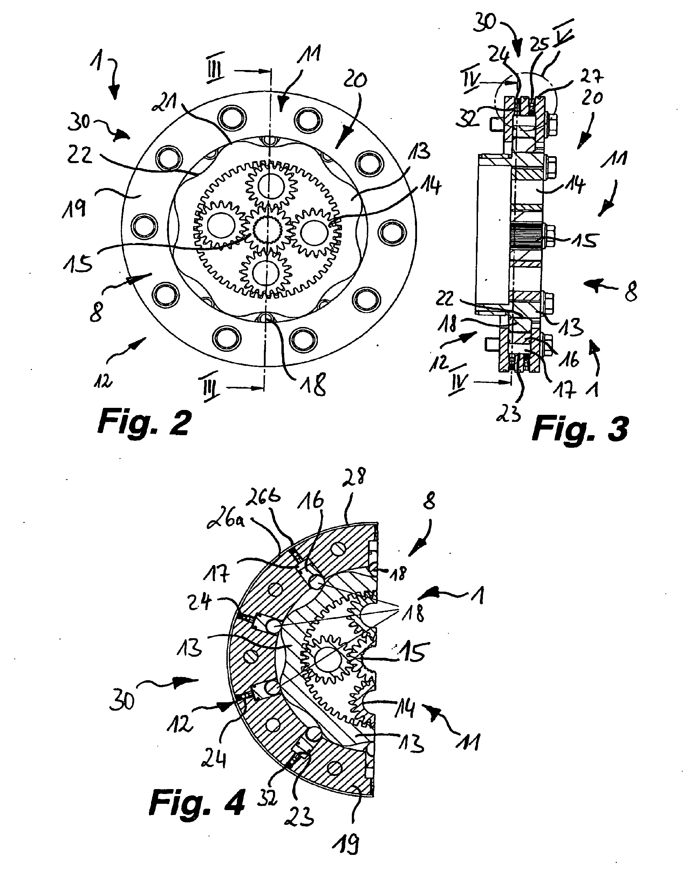

In den Fig.2 bis 4 erkennt man eine kreisringförmige, manipulierbare Hydrostatikeinrichtung 11 der Getriebeanordnung 1 mit zehn mit gleichem Winkelabstand über das ringförmige Gehäuse 19 verteilten Kolben-Zylinder-Anordnungen 12. Die Hydrostatikeinrichtung 11 fasst den einer achshälftigen Antriebswelle 5 zugeordneten Planetentrieb 8 ein, der das Hohlrad 13, die vier Planeten 14 sowie das Sonnenrad 15 aufweist.

Angetrieben durch das in dieser Anordnung zentrale Sonnenrad 15 kämmen die vier Planeten 14 mit der Innenverzahnung des Hohlrades 13, so dass dieses in eine Rotation versetzt wird. An dem Planetentrieb 8 der Fig.2 bis 4 ist ein rotierendes Steuerglied 20 mit geschlossener Kontur angeordnet, das mit sich gegenüber der Drehachse abwechselnden konvex und konkav gekrümmten Gliedabschnitten, die Nocken 21 und Hubtäler 22 bilden, versehen ist. Die acht Nocken 21 und ebenso vielen Hubtäler 22 weisen dabei eine elliptische Krümmung auf. Das Steuerglied ist bei dieser Ausführung demnach durch die Außenkontur des Hohlrades 13 gebildet. Gleichzeitig bildet im Sinne der Erfindung das Hohlrad 13 als Steuerglied 20 einen ringförmigen axialen Abschnitt 33 eines rotierenden Trägers 34, der mit seiner Außenkontur die Kolben 16 antreibt.

Die radial in ihren Zylindern 17 angeordneten Kolben 16 der Kolben-Zylinder-Anordnungen 12 greifen mit ihren dem Planetentrieb 8 zugewandten Rollen 18 in die durch die Hubtäler 22 zwischen den Nocken 21 der Außenkontur des Hohlrads 13 gebildeten Ausnehmungen ein. Durch die Rotation des Hohlrads aufgrund des Antriebs über das Sonnenrad 15 und die Planetenräder 14 führen die Kolben 16 eine radiale Bewegung aus und rollen sich auf der Außenkontur des Hohlrads 13 ab.

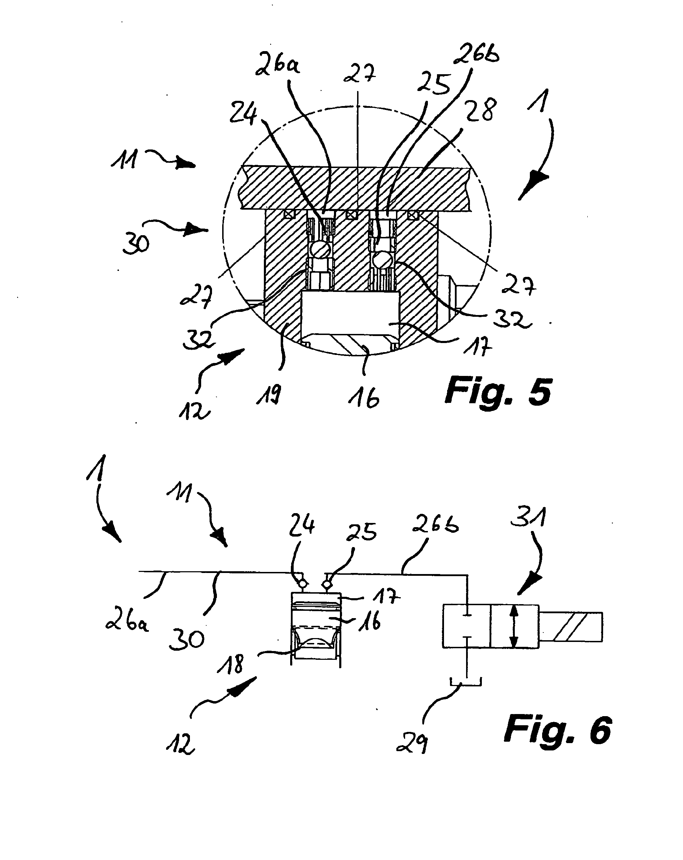

Wie man am besten der Fig.5 entnimmt, die den eingekreisten, mit der Ziffer V indizierten Bereich der Fig.3, erweitert durch die Wand des Gehäuses 28 eines nicht dargestellten Getriebes, zeigt, befinden sich an den Zylinderböden 23 der Zylinder 17 der Kolben-Zylinder-Anordnungen 12 jeweils in einer Aufnahme 32 je ein Saugventil 24 und ein Druckventil 25. Die Aufnahmen 32 sind in axialer Richtung des Gehäuses 19 hintereinander angeordnet, so dass in der Schnittdarstellung der Fig.5 nur die Aufnahmen 32 der Saugventile zu erkennen ist. Die Ventile 24, 25 sind jeweils mit durch den dem Hohlrad 13 abgewandten Bereich der Aufnahme 32 gebildeten, an dem Gehäuse 19 umlaufenden ringartigen Kanälen 26a, 26b verbunden, wodurch jeweils alle Saugventile 24 und Druckventile 25 der Hydrostatikeinrichtung 11 miteinander verbunden sind. Die Verbindung der die Transporteinrichtung 30 bildenden nutartigen Saug- und Druckkanäle 26a, 26b untereinander wird durch die geeignete Anordnung von in Aufnahmen parallel zu den Kanälen 26b, 26b geführten Dichtungen 27 unterbunden.

Der Saugringkanal 26a ist an einer geeigneten Stelle mit einer Niederdruckversorgung oder mit einem Fluidvorrat verbunden. Bei einer axialen Bewegung der Kolben 16 der Kolben-Zylinder-Anordnung 12 wird an der Hydrostatikeinrichtung 11 Flüssigkeit über die Saugventile 24 angesaugt, während über die Druckventile 25 Flüssigkeit in den Ringkanal 26b gedrückt wird. Saug- und Druck-Ringkanäle 26a, 26b werden von dem Getriebegehäuse 28 umschlossen und gegeneinander abgedichtet. An einer geeigneten Stelle in dem Getriebegehäuse 28 wird der Druck-Ringkanal 26b mit einem Steuerelement 31, in der Fig. 6 erkennbar als hydraulische Proportionaldrossel, verbunden. Der Rücklauf des Steuermittels wird in den Fluidvorrat 29 zurückgeleitet und kann bevorzugt der Schmierung der nicht näher dargestellten Getriebemechanik zur Verfügung gestellt werden.

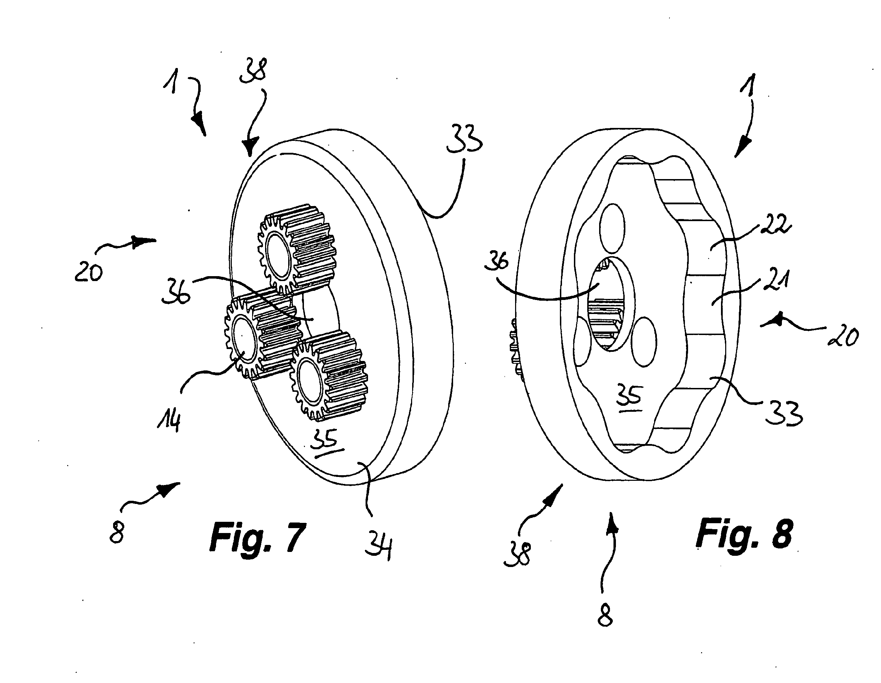

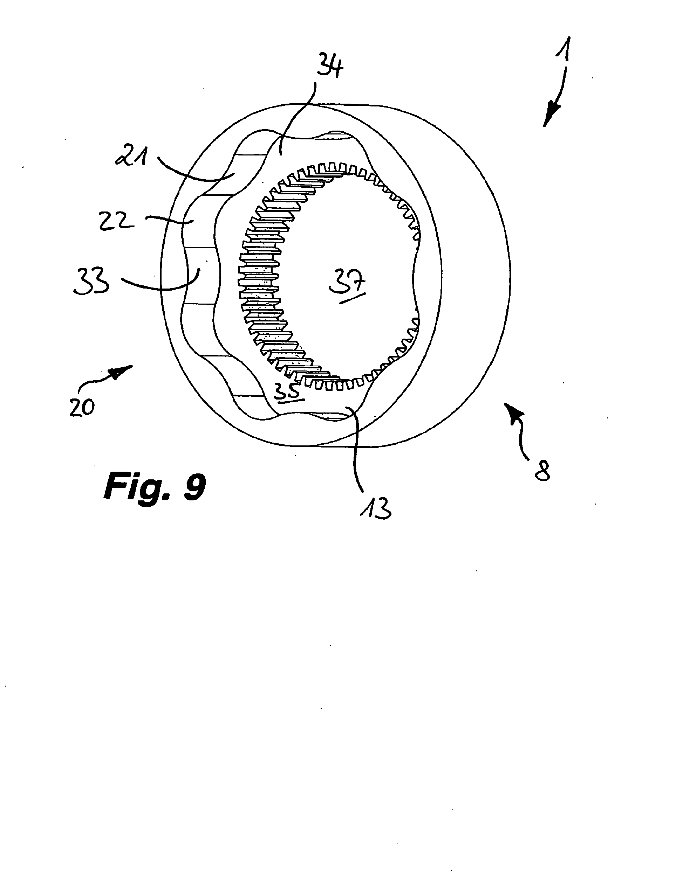

In den Fig.7 bis 9 sind weitere Ausführungsbeispiele des Steuerglieds 20 der erfindungsgemäßen Getriebeanordnung 1 zu erkennen, wobei die Fig.7 und 8 zwei Ansichten der Vorder- und Rückseite des gleichen Steuerglieds 20 zeigen. In allen drei Figuren ist das Steuerglied als ringförmiger axialer Abschnitt 33 eines rotierenden Trägers 34 gebildet, wobei in der Ausführung der Fig.7 und 8 der Träger 34 durch den Planetenträger 38 der Planetenräder 14, in dem Beispiel der Fig.9 durch das Hohlrad 13 gebildet ist. Weiter ist den Fig.7 bis 9 zu entnehmen, dass der axiale Abschnitt durch eine abwechselnde Folge von Nocken 21 und Hubtälern 22 gebildet ist.

An dem Trägerboden 35 des Trägers 34 der Fig. 7 und 8 sind an der einen Flachseite die in einer dreieckigen Konfiguration angeordneten Planetenräder 14 des Planetentriebs 8 zu erkennen. Der axiale Abschnitt 33 bildet den axial von dem Trägerboden 35 auf der den Planetenrädern 14 abgewandten Seite abstehenden Rand des Trägers 34 mit nach innen weisenden Nocken 21 und Hubtälern 22. Dies bedeutet, dass das Steuerglied 20 mit dem axialen Abschnitt 33 das nicht dargestellte Gehäuse 19 der radialen Kolben-Zylinder-Anordnungen 12 einfasst, deren Kolben 16 mit ihren Rollen 18 radial nach außen wirken und mit einer nach innen wirkenden Kontur des Trägers 34 zusammenwirken. Ebenso verhält es sich mit dem Steuerglied 20 der Fig.9, das an dem Hohlrad 13 als Träger 34 angeordnet ist, dessen eine Stirnseite den Trägerboden 35 bildet, von welchem der axiale Abschnitt 33 absteht. Bei dieser Anordnung der Kolben 16 an dem scheibenartigen Gehäuse 19 ist in einem zentralen, ausgenommenen Innenbereich von diesem die Transporteinrichtung 30 vorzusehen.

In den Durchgriff 36 der Fig. 7 und 8 kann etwa ein antriebsseitiger Abschnitt der nicht dargestellten Antriebswelle 5 greifen, der an seinem dem Planetentrieb 8 zugewandten Ende mit dem ebenfalls nicht dargestellten, zentral zwischen den Planetenrädern 14 anzuordnenden Sonnenrad verbunden ist. Demgegenüber greift in den Durchgriff der Fig.9 der Planetenträger mit den mit der Verzahnung des Hohlrad 13 kämmenden Planetenrädern 14. Die Ausführungsbeispiele der Fig.7 bis 9 sollen verdeutlichen, dass bei einem Planetentrieb 8 alle Teile sowohl an- als auch abgetrieben sein können.

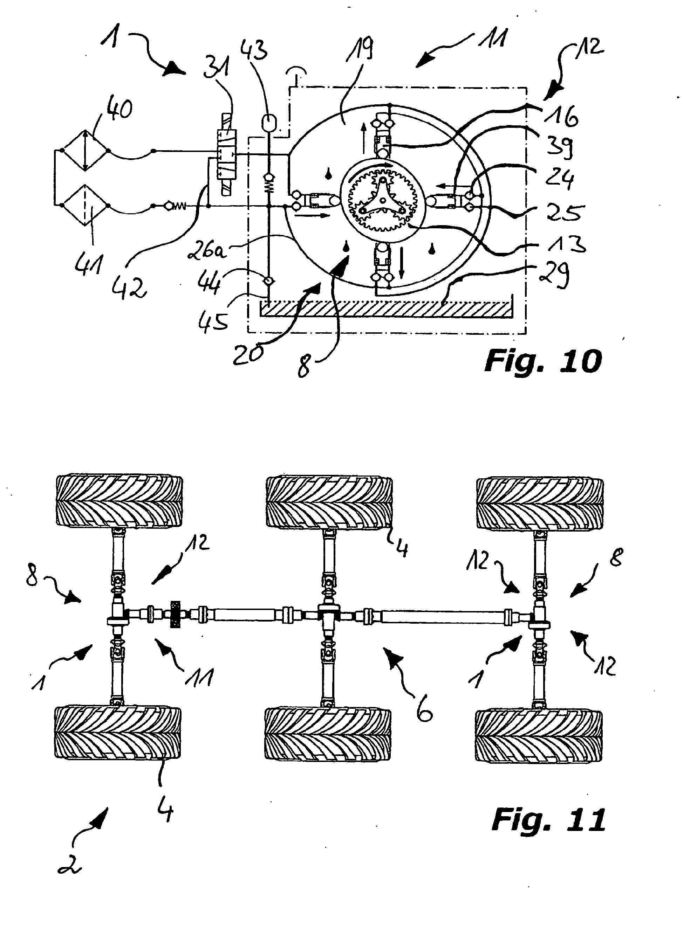

In der Fig.10 ist schematische eine Getriebeanordnung 1 gezeigt, bei welcher in einer vereinfachten Darstellung die Koben-Zylinder-Anordnung 12 mit vier Rollenkolben 16 an dem Gehäuse 19 vorgesehen ist, weswegen das Hohlrad 13 exzentrisch gezeigt ist. Die Rückstellung der Koben 16 erfolgt dabei nicht durch ein Speisefluid, sondern durch als Federn ausgebildete Stellmittel 39. Die durch die Leckage der Kolbenabdichtung entstehende Fluid-Fehlmenge wird durch das mit dem Fluidsumpf 29 verbundene Saugrohr 45 nachgesaugt. Das eingebaute Rückschlagventil 44 verhindert hierbei einen Fluidfluss in entgegengesetzter Richtung. Bei Kurvenfahrt des nicht dargestellten Fahrzeugs 2 und kaltem Öl wird das als Proportional-Hydraulikregler gezeigte Steuermittel 31 nach unten verschoben, wodurch Fluid durch den Bypass 42 direkt in den Saugkanal 26a der Transporteinrichtung 30 des Systems fließen. Bei heißem Öl wird der Regler nach oben verschoben, und Fluid kann über den Kühler 40 und den Fluidfilter 41 wiederum in den Saugkanal der Transporteinrichtung 30 des Systems fließen. Somit kann, ohne eine weitere Fluidpumpe in Anspruch zu nehmen, jedes Rad 4a-4d des nicht dargestellten Fahrzeugs 2 eigenversorgt sein, das Fluid gekühlt und gereinigt werden und es kann bei kaltem Fluid ein kurzer Kreislauf etabliert werden, also insgesamt ein sehr einfacher Aufbau der Getriebeanordnung 1 realisiert werden. Optional können sowohl der Druck- wie auch der Saugkanal der Transporteinrichtung 30 mit einem Hydrodämpfer 43 verbunden werden.

Nun zu den Fig.1 bis 6 zurückkehrend kann dort, wenn das Steuerelement 31 der Fig.6 geschlossen wird, auch keine Druckflüssigkeit entweichen, und die Kolben 16 der Kolben-Zylinder-Anordnung 12 können sich nicht bewegen. Das Hohlrad 13 ist dann unbeweglich, wodurch das Fahrzeug 2 ohne Drehzahlminderung der erfindungsgemäßen Einrichtung angetrieben wird. Die Verzweigung des Antriebsstranges des Fahrzeugs 2 erfolgt hierbei starr, es ist also kein Differenzial in dem Strang angeordnet. Beide Achsantriebe werden mit derselben Drehzahl angetrieben. Bei einer in der Fig.1 dargestellten Kurvenfahrt wird der Lenkwinkel durch einen Sensor 7 erfasst und an Steuereinrichtung 6 geleitet. Die Ablauflinien 10a-10d werden errechnet und das Steuermittel derart beeinflusst, dass die zum Erreichen der richtigen Drehzahldifferenz notwendige Fluidmenge durch das Steuerelement 31 entweichen kann und die Räder unter Beibehaltung des Drehmoments, unabhängig der Reibungskoeffizienten und Lasten, angetrieben oder gebremst werden. Die dabei erzeugten Raddrehzahlen entsprechen nicht der Bewegungsgleichung (doppelte Drehzahl des Differenzials = Summe der angetriebenen Raddrehzahlen) eines mechanischen Differenzials, sondern das kurvenäußerste Rad 4a wird direkt mechanisch angetrieben, während alle kurveninneren, folgenden Räder 4b, 4c, 4d verlangsamt werden. Der Einfluss der Hydrostatikeinrichtung 11 auf den mechanischen Wirkungsgrad des Antriebsstrangs ist dabei kleiner als etwa 5 Promille.

Dementsprechend handelt es sich bei den Ausführungsbeispielen der Figuren um beeinflussbare Planetentriebe 8 durch eine manipulierbare Hydrostatikeinrichtung 11 in radialer Bauweise, wobei das Hohlrad 13 oder/und die Planetenräder 14 oder/und das Sonnenrad 15 derart beeinflusst werden, dass die mechanische Übersetzung keine starre Größe ist, sondern die Drehzahl des angetriebenen oder weiterführenden Antriebsstranges stufenlos verlangsamt wird, wobei sich die zur Steuerung notwendigen Steuermechanismen, wie etwa Ventile 24, 25, Transporteinrichtung 30 oder Steuerelement 31, im nicht rotierenden Bereich befinden.

Gegenüber herkömmlichen Getriebeanordnungen wird hierdurch mit erheblich reduziertem technischen Aufwand eine robuste und wartungsfreundliche Konstruktion der Getriebeanordnung 1 erreicht, die ohne Verwendung eines Differenzials in der Lage ist, alle Drehmomentbereiche zu realisieren kann. Gleichzeitig ist kein Entlüften der Hydrostatikeinrichtung 11 der Anordnung 1 erforderlich, da sich das System selbstständig füllt und entlüftet, weiter gibt es keine Temperaturprobleme, da das Steuermittel ständig ausgetauscht wird, und es ist auch keine interne Abdichtung an den Kolben des Systems erforderlich. Schließlich ermöglich es die Anordnung 1, die Steuermechanismen der Steuereinrichtung 6 vom Rotationsbereich der Getriebeanordnung fernzuhalten.

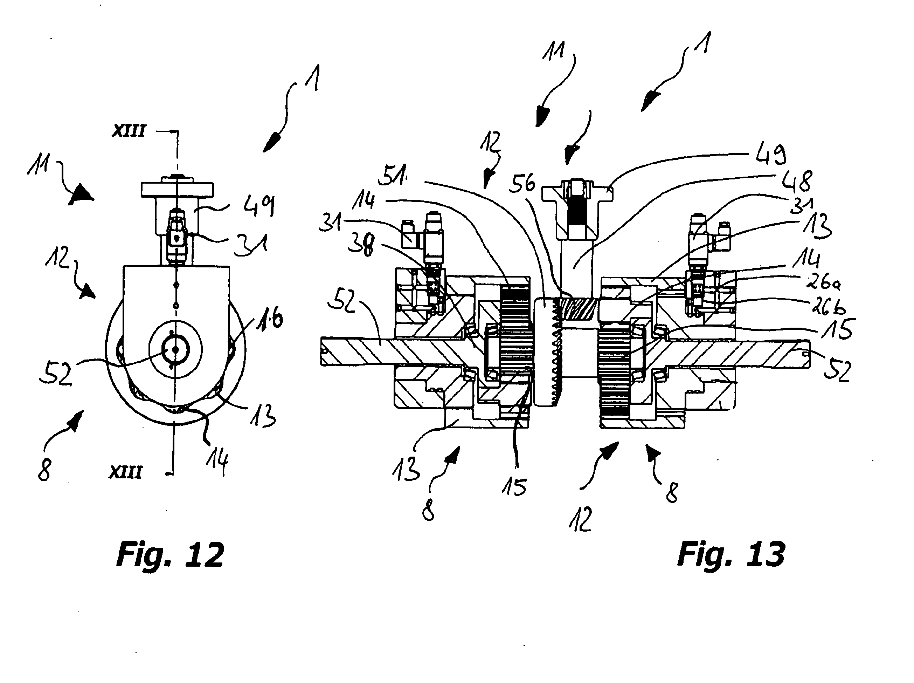

Ein weiteres Ausführungsbeispiel der Getriebeanordnung 1 ist in den Fig. 12 und 13 zu erkennen, wobei die Fig.13 eine teilgeschnittene Ansicht der Darstellung der Fig.12 entlang der dortigen Schnittlinie XIII-XIII ist. In den beiden Fig.12 und 13 ist zu erkennen, dass bei dieser vorteilhaften Anordnung die Hydrostatikeinrichtung 11 mit zwei Steuerelementen 31 nicht wie vorstehend beschrieben im Bereich der Radnaben, sondern jetzt direkt neben oder in unmittelbarer Nähe eines AchsVerzweigungsgetriebes 50 mit antriebsseitigem Kegelrad 56 und mit diesem kämmenden Tellerrad 51 angeordnet ist. Es handelt sich dabei um eine sehr kompakte, geschlossene Einheit, während es sich bei der bisher beschriebenen um eine aufgelöste Konstruktion handelte. Die Funktion insbesondere hinsichtlich der Hydrostatikeinrichtung 11 und der mittels dieser erreichbaren Lenkmanipulation, also hinsichtlich der funktionellen Ergebnisse entsprechen den bereits beschriebenen Ausführungsbeispielen. Der Unterschied liegt in der sehr kompakten Bauart, welche dadurch entsteht, dass etwa wenigstens eines der Sonnenräder 15 aus einem Stück mit dem Tellerrad 51 ausgebildet ist, oder anderenfalls mit diesem zumindest in einer festen Wirkverbindung steht. Die das jeweilige Sonnenrad 15 umlaufenden Planetenräder 14 sind mit dem Planetenträger 38 verbunden, welcher wiederum einstückig mit der Abtriebswelle 52 ausgebildet ist. Bei feststehenden Hohlrädern 13 besteht ein nahezu festes Übersetzungsverhältnis zwischen dem an dem dem Kegelrad 56 gegenüberliegenden Ende der Antriebswelle 48 befindlichen Antriebsritzel 49 und den beiden Abtriebswellen 52.

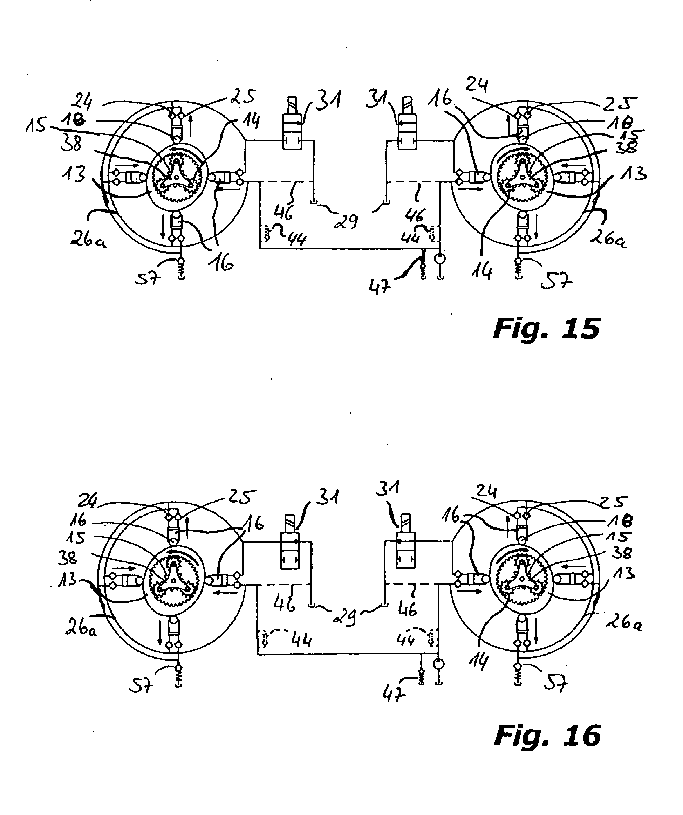

Nun zusätzlich die Fig.15 betrachtend, die den zu den Fig.12 und 13 gehörigen Fluidkreislauf zeigt, kann bei Bestromung der als Magnetventil ausgeführten Steuerelemente 31 Fluid in Pfeilrichtung an dem Steuerelement 31 fließen. Den pro Achshälfte aufgrund der Übersichtlichkeit erneut nur vier gezeigten Kolben 16 wird hierdurch eine kontrollierte Bewegung ermöglicht, und die Hohlräder 13 können sich um einen entsprechenden Wert drehen. Die Drehzahl des kämmenden Planetenträgers 38 mit der dazugehörenden Abtriebswelle wird dadurch entsprechend reduziert.

Die Vorteile gegenüber der aufgelösten Variante der Getriebeanordnung 1 stellen sich zunächst in den extrem kurzen Fluidkanälen 26a, 26b der Fig.13 dar. Des Weiteren kann das Fluid bei geöffnetem Steuerelement 31 (bei dem erwähnten Magnetventil kann es sich um ein Proportionalventil oder auch um ein Ventil mit an/aus-Funktion handeln) entweder in den Saugkanal 26a über das Verbindungsstück 46 oder in den Fluidsumpf 29 zurückgeführt werden. Eine Rückführung in den Fluidsumpf 29 hat den Vorteil, dass bei einer eventuell notwendigen Kühlung die technischen Aufwendungen für dieselbe wesentlich geringer ausfallen als bei einer aufgelösten Variante. Einfacher wird auch die Versorgung mit Speisefluid. Eine gemeinsame Fluidpumpe kann alle dem Fluidsumpf angehörenden Hydrostatikeinrichtungen 11 versorgen. Die Rückschlagventile 44 werden erforderlich, wenn das am Steuerelement 31 abströmende Fluid nicht in den Sumpf 29, sondern direkt in den Ansaugkanal 26a fließt. Dabei hält ein Druckbegrenzungsventil 47 den Speisedruck konstant, während die weiteren Druckbegrenzungsventile 57 den Höchstdruck des Systems begrenzen. Je nachdem, wo die Konstruktionsschwerpunkte liegen, ist hierbei sogar ein Systemdruck weit über 450 bar denkbar.

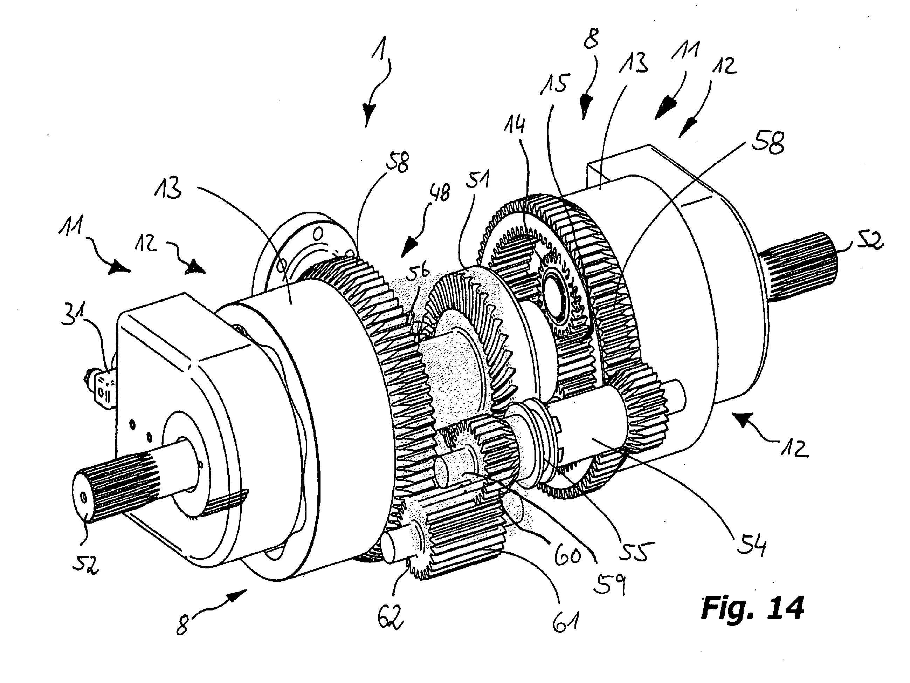

Alle bisher gezeigten Ausführungen sind wohlgemerkt nicht momentengesteuert. Die Raddrehzahlen sind immer das Ergebnis errechneter Werte. Die Vorteile der aufgelösten, wie auch der kompakten Ausführung der erfindungsgemäßen Getriebeanordnung 1 können jedoch von dem unterschiedlich zu bewertenden Nachteil des Leistungsverlustes auch relativiert werden. Bei Straßenfahrt oder in leichtem Gelände können die Nachteile durch Energieverlust überwiegen, während bei schwerem Gelände die Vorteile durch vollständige (100%) Traktion sicher eindeutig überwiegen. Eine diesen Nachteil kompensierende, weitere Ausbildung zeigt die Fig. 14 in Verbindung mit Fig. 16. Auch hier wird auf eine erneute Beschreibung des hydrostatischen Teils verzichtet.

Bei Straßenfahrt bzw. leichtem Gelände ist, wie in Fig.16 schematisch gezeigt, das dortige, als Magnetventil ausgebildete Steuerelement 31, stromlos. Dieser Zustand entspricht einem voll geöffneten Ventil, so dass Fluid ungehindert in Pfeilrichtung am Steuerelement 31 fließen kann, womit die Hydrostatik ohne aktive Funktion ist. Da sich bei einer Fortbewegung des Fahrzeugs an den beiden Hohlrädern 13 der Fig. 14 ein Drehmoment aufbaut, muss dieses bei einer deaktivierten Hydrostatik anderweitig abgestützt werden. Diese Aufgabe wird in diesem Fall mechanisch gelöst. Die Hohlräder 13 in der Fig.14 haben jeweils in Ihrem dem Tellerrad 51 zugewandten Abschnitt an ihrem Außenumfang eine Verzahnung 58, die in Wirkverbindung mit der parallel zu den Abtriebswellen 52 angeordneten Vorgelegewelle 54 steht. Die Vorgelegewelle 54 ist wiederum drehfest über das als Klauenkupplung ausgebildete Schaltmittel 55 mit der koaxial ausgerichteten Welle 59 lösbar verbunden. Die Klauenkupplung dient hier als Beispiel und kann aufgabengleich durch eine Reibkupplung oder Hydrostatikeinrichtung 11 ersetzt sein. Das an der koaxialen Welle 59 befindliche Zahnrad 60 steht in Wirkverbindung mit dem Zahnrad Fig. 61 der Welle 62, welches wiederum mit der Verzahnung 58 des Hohlrads 13 der benachbarten Abtriebswelle 52 kämmt. Diese Getriebeanordnung 1 mit zuschaltbarer Vorgelegewelle 54 bewirkt, dass eine feste Verbindung der beiden Hohlräder 13 zueinander, jedoch in entgegengesetzter Richtung entsteht. Bei Geradeausfahrt werden beide Hohlräder 13 mit einem gleichen Drehmoment beaufschlagt, wodurch keine Relativbewegung der Hohlräder 13 zueinander entsteht. Bei einer Rechtskurve beispielsweise erzeugt das für den Betrachter rechte Hohlrad 13 ein höheres Drehmoment und dreht sich dabei rückwärts. Über die Wellen 54, 59 und 62 wird das für den Betrachter linke Hohlrad 13 beschleunigt, wodurch die linke Seite schneller läuft. Der durch diese Anordnung stattfindende mechanische Ausgleich kann durch Betätigen des Schaltmittels verursachtes Lösen der Wirkverbindung der Wellen 54, 59 und 62 wieder aufgehoben werden.

Bei einem solchen kombinierten System ist es vorteilhaft, die Systemwahl nicht einem Fahrer, der ohnehin meist überlastet ist, sondern der teilweise schon vorhandenen Elektronik zu überlassen. Die Raddrehzahlen von Kraftfahrzeugen werden in der Regel bereits durch die Radsensoren der ABS-Einrichtung überwacht, auch Sensoren der nicht weiter gezeigten Sensoreinrichtung 7 sind einsetzbar. Werden diese Raddrehzahlen unter Berücksichtigung eines Toleranzfensters mit der gerade beschriebenen zuschaltbaren mechanischen Einrichtung nicht mehr eingehalten, so kann das System auf das bereits beschriebene, ausschließlich hydrostatische System umschalten. Fährt ein Fahrzeug 2 mit der Getriebeanordnung der Fig. 14 beispielsweise im mechanischen Modus, ist auch die Klauenkupplung 55 geschlossen. Meldet die Elektronik eine fehlerhafte Raddrehzahl, wird die Klauenkupplung 55 geöffnet und die Hydrostatikeinrichtung 11 wird durch das Regeln der beiden Steuerelemente 31 aktiviert. Sobald die Raddrehzahlen über einen bestimmten Zeitraum wieder korrekt arbeiten, wird die Klauenkupplung 55 geschlossen und die Hydrostatikeinrichtungen deaktiviert. Diese kombinierte Anordnung 1 kann vorteilhafterweise so betrieben werden, dass keine hydraulische Verlustleistung auf der Straße oder in leichtem Gelände auftritt, sie ist aufgrund der mechanischen Verbindung als Getriebe-Feststellbremse einsetzbar und das Fahrzeug ist auch stromlos standardmäßig fahrbereit.

Schließlich noch auf die Fig.11 eingehend ist dort ein Fahrzeug 2 mit Rädern 4 und mit einer Mehrzahl von an seinem Antriebsstrang befindlichen Getriebeanordnungen 1 gezeigt, wobei an dem Fahrzeug alle Achsen und damit alle Räder 4 antreibbar sind, also ein sogenanntes 6x6-Fahrzeug. Das Fahrzeug 2 ist mechanisch angetrieben und nur die Relativbewegungen der Antriebswellen, einer Achse sowie das Verhalten zu weiteren am Fahrzeug befindlichen Achsen werden hydrostatisch den jeweiligen Erfordernissen angepasst. Abhängig von der Einrichtung der Steuereinrichtung 6 und insbesondere von deren Programmierung können die Achs- oder Raddrehmomente beeinflusst werden, beispielsweise in verschiedenen Master-Slave-Konfigurationen. So können zum Beispiel nach Wunsch mit dem vorliegenden System durchaus im Gelände immer alle Räder konstant angetrieben werden. Andererseits ist bei langer Straßenfahrt das Kriterium Allradantrieb zweitrangig und Kriterien wie Kraftstoffersparnis, Reifenschonung und Leichtgängigkeit stehen im Vordergrund. Mit der Steuereinrichtung 6 kann bei dem gezeigten Fahrzeug 2 standardmäßig bei solchen Fahrten nur eine Achse (Master-Achse) angetrieben und die anderen zwei Achsen (Slave-Achsen) nicht angetrieben laufen. Welche Achse eine Master- oder Slave-Funktion inne hat, kann auch während der Fahrt beeinflusst und zugeordnet werden. So ist es beispielsweise möglich, das Fahrzeug zunächst an der Hinterachse anzutreiben, bei 30km/h in der Mitte und bei 50km/h vorne anzutreiben, je nachdem, welche Kriterien bei welchem Einsatz im Vordergrund stehen.

Die Fig.11 soll verdeutlichen, dass im Falle der gezeigten Fahrzeuge bzw. Getriebeanordnungen 1 ein Zusammenhang zwischen dem mechanischen Antrieb 3, einer Hydrostatikeinrichtung 11 und dem Achsausgleich hergestellt wird. Überdies beeinflusst die Hydrostatikeinrichtung 11 auch weitere Achsen, da auf Längsausgleich zwischen Achsen verzichtet werden kann, letztlich wird das jeweilige Fahrzeug 2 mechanisch angetrieben und nur die Relativbewegungen der Abtriebswellen 52 bzw. der Achshälften 5 einer Achse sowie das Verhalten zu weiteren am Fahrzeug befindlichen Achsen werden hydrostatisch den jeweiligen Erfordernissen angepasst. Daneben wird bei den vorgestellten Getriebeanordnungen 1, wie gesehen, das Hohlrad 13 in eine strenge Abhängigkeit mit einer proportional manipulierbaren Hydrostatikeinrichtung 11 versetzt, welche wiederum nur sekundär arbeitet, es wird also lediglich mechanische in hydraulische Energie überführt.

Demgemäß betrifft die vorstehend beschriebene Erfindung also eine Getriebeanordnung 1, die am Antriebsstrang eines mehrachsigen Landfahrzeugs 2, insbesondere eines Nutzfahrzeugs, oder dergleichen Fortbewegungsmittels angeordnet ist, von welchen Achsen wenigstens eine angetrieben ist, wobei den Achshälften 5 einer angetriebenen Achse jeweils wenigstens ein Planetentrieb 8 zugeordnet ist und mit wenigstens einer Sensoreinrichtung 7 zur Erfassung einer Lenkmanipulation an dem Fahrzeug 2, sowie mit einer Steuereinrichtung 6.

Um eine Getriebeanordnung 1 zur Verfügung zu haben, die mit geringem Aufwand sowohl eine sichere, einfach aufgebaute Verbindung zwischen Antriebsmotor und angetriebenen Rädern 4 herstellt als auch beim Antrieb wie bei der Verzögerung eine zuverlässige Steuerung der betreffenden Räder 4 hinsichtlich Drehzahl und Drehmoment ermöglicht, und so einen steuerbaren Drehzahlausgleich bei Kurvenfahrt realisiert und die bei insbesondere bei Fahrzeugen 2 mit einem hohen Achsdrehmoment, den Durchmesser sowie die Baugröße des Verzweigungsgetriebes erheblich zu reduziert, wird vorgeschlagen, die Achshälften 5 differenzialfrei gleichlaufend anzutreiben und die Steuereinrichtung 6 mit einer manipulierbare Hydrostatikeinrichtung 11 zu versehen, mittels derer jedes der schlupffrei abrollende Räder 4 sein Drehmoment beibehält.

## Patentansprüche

1. Getriebe-Anordnung, die am Antriebsstrang eines ein- oder mehrachsigen Landfahrzeugs, insbesondere eines Nutzfahrzeugs, oder dergleichen Fortbewegungsmittels angeordnet ist, von welchen Achsen wenigstens eine angetrieben ist, wobei den Achshälften einer angetriebenen Achse jeweils wenigstens ein Planetentrieb zugeordnet ist und mit wenigstens einer Sensoreinrichtung zur Erfassung einer Lenkmanipulation an dem Fahrzeug, sowie mit einer Steuereinrichtung, wobei die Planetentriebe durch die Steuereinrichtung anhand von aus den Lenkmanipulationsdaten errechneten Werten derart steuerbar sind, dass jedes der betreffenden, an der jeweiligen Achshälfte angeordneten Räder mit einer Drehzahl angetrieben wird, bei welcher es schlupffrei abläuft, **dadurch gekennzeichnet**, die Achshälften (5) differenzialfrei gleichlaufend angetrieben sind und dass die Steuereinrichtung (6) eine manipulierbare Hydrostatikeinrichtung (11) aufweist, mittels derer jedes der schlupffrei abrollende Räder (4) sein Drehmoment beibehält.

2. Getriebeanordnung nach Anspruch 1, **dadurch gekennzeichnet, dass** die Steuereinrichtung (6) mit wenigstens einem Steuerelement (31) zur Steuerung des Kreislaufs eines hydraulischen Steuermittels versehen ist.

3. Getriebeanordnung nach Anspruch 1 oder 2, **dadurch gekennzeichnet, dass** das wenigstens eine Steuerelement (31) von dem gesteuerten Planetentrieb (8) beabstandet angeordnet ist.

4. Getriebeanordnung nach einem der vorhergehenden Ansprüche, **dadurch gekennzeichnet, dass** an dem Planetentrieb (8) ein rotierendes Steuerglied (20) mit geschlossener Kontur angeordnet ist, das mit sich abwechselnden konvex und konkav gekrümmten Gliedabschnitten, die Nocken (21) und Hubtäler (22) bilden, versehen ist.

5. Getriebeanordnung nach einem der vorhergehenden Ansprüche, **dadurch gekennzeichnet, dass** das Steuerglied (20) des Planetentriebs (8) drehfest als ringförmiger axialer Abschnitt (33) eines rotierenden Trägers (34) vorgesehen ist, dessen Rotation eine Mehrzahl von in gleichem Winkelabstand angeordneten Kolben-Zylinder-Anordnungen (12) der Hydrostatikeinrichtung (11) antreibt.

6. Getriebeanordnung nach Anspruch 5, **dadurch gekennzeichnet, dass** der axiale Abschnitt (33) an dem Träger (34) koplanar oder axial versetzt zu dem Hohlrad (13) des Planetentriebs (8) angeordnet ist.

7. Getriebeanordnung nach Anspruch 6, **dadurch gekennzeichnet, dass** der Träger (34) durch das Hohlrad (13) oder einen Planetenträger (38) gebildet ist.

8. Getriebeanordnung nach einem der vorhergehenden Ansprüche, **dadurch gekennzeichnet, dass** dem Träger (34) abgewandte Zylinderböden (23) der Kolben-Zylinder-Anordnungen (12) über je ein Saug- bzw. ein Druckventil (24, 25) mit jeweils einer Saug- und einer Druckseite einer das Gehäuse (19) umlaufenden Transporteinrichtung (30) des Hydraulikfluids verbindbar sind.

9. Getriebeanordnung nach Anspruch 8, **dadurch gekennzeichnet, dass** die Transporteinrichtung (30) durch wenigstens einen jedem Saugventil (24) und einen jedem Druckventil (25) zugeordneten Ringkanal (26a, 26b) an dem Gehäuse (19) oder durch Hydraulikleitungen gebildet ist.

10. Getriebeanordnung nach Anspruch 9, **dadurch gekennzeichnet, dass** der Saugkanal (26a) mit einer Niederdruckversorgung des Hydraulikfluids verbunden ist.

11. Getriebeanordnung nach einem der vorhergehenden Ansprüche, **dadurch gekennzeichnet, dass** die Kolben-Zylinder-Anordnungen (12) mit einem Gehäuse 19 versehen sind, welches in einem Bereich seines Umfangs auf der Druckseite mit dem Steuerelement (31) verbunden ist.

12. Getriebeanordnung nach einem der vorhergehenden Ansprüche, **dadurch gekennzeichnet, dass** die Kolben-Zylinder-Anordnungen (12) jeweils mit wenigstens einem mechanischen Stellmittel (39) zur Unterstützung der Bewegung der Kolben (16) in Richtung auf das Hohlrad (13) versehen sind.

13. Getriebeanordnung nach einem der vorhergehenden Ansprüche, **dadurch gekennzeichnet, dass** die Planetentriebe (8) der beiden Achshälften (5) einer angetriebenen Achse mit der zugeordneten Hydrostatikeinrichtung (11) mit Steuerelement (31) in unmittelbarer Umgebung eines den Achshälften (5) zuordenbaren Achsverzweigungsgetriebes (50) angeordnet sind.

14. Getriebeanordnung nach einem der vorhergehenden Ansprüche, **dadurch gekennzeichnet, dass** an dieser ein über ein Schaltmittel (55) zuschaltbares Ausgleichsgetriebe (53) angeordnet ist.

15. Getriebeanordnung nach Anspruch 14, **dadurch gekennzeichnet, dass** das Schaltmittel (55) als Kupplung, insbesondere als eine Klauen- oder eine Reibkupplung, oder als eine weitere Hydrostatikeinrichtung vorgesehen ist.

## Claims

1. Gearbox arrangement which is arranged on the drive train of a single-axle or multi-axle : land vehicle, in particular a utility vehicle or similar means of transportation, at least one of said axles being driven, wherein at least one planetary drive is allocated in each case to the axle halves of a driven axle and having at least one sensor device for detecting a steering manipulation on the vehicle, and having a control device, wherein the planetary drives can be controlled by the control device using values calculated from the steering manipulation data, such that each of the relevant wheels arranged on the respective axle half is driven at a rotational speed, at which it rolls without slippage, **characterised in that** the axle halves (5) are driven synchronously without a differential, and **in that** the control device (6) comprises a manipulable hydrostatic device (11), by means of which each of the wheels (4) rolling without slippage maintains its torque.

2. Gearbox arrangement as claimed in claim 1, **characterised in that** the control device (6) is provided with at least one control element (31) for controlling the circuit of a hydraulic control medium.

3. Gearbox arrangement as claimed in claim 1 or 2, **characterised in that** the at least one control element (31) is arranged spaced apart from the controlled planetary drive (8).

4. Gearbox arrangement as claimed in any one of the preceding claims, **characterised in that** a rotating control member (20) having a closed contour is arranged on the planetary drive (8) and is provided with alternately convexly and concavely curved member portions which form cams (21) and valleys (22).

5. Gearbox arrangement as claimed in any one of the preceding claims, **characterised in that** the control member (20) of the planetary drive (8) is provided non-rotatably as an annular axial portion (33) of a rotating carrier (34), of which the rotation drives a plurality of piston-cylinder arrangements (12) of the hydrostatic device (11) which are arranged at the same angular distance.

6. Gearbox arrangement as claimed in claim 5, **characterised in that** the axial portion (33) on the carrier (34) is arranged in a coplanar or axially offset manner with respect to the internal geared wheel (13) of the planetary drive (8).

7. Gearbox arrangement as claimed in claim 6, **characterised in that** the carrier (34) is formed by the internal geared wheel (13) or a planetary carrier (38).

8. Gearbox arrangement as claimed in any one of the preceding claims, **characterised in that** cylinder bases (23) of the piston-cylinder arrangements (12) remote from the carrier (34) can be connected via a respective suction or pressure valve (24, 25) in each case to a suction side and a pressure side of a transport device (30) of the hydraulic fluid, which transport device surrounds the housing (19).

9. Gearbox arrangement as claimed in claim 8, **characterised in that** the transport device (30) is formed by at least one annular channel (26a, 26b) - allocated to each suction valve (24) and each pressure valve (25) - on the housing (19) or by means of hydraulic lines.

10. Gearbox arrangement as claimed in claim 9, **characterised in that** the suction channel (26a) is connected to a low pressure supply of the hydraulic fluid.

11. Gearbox arrangement as claimed in any one of the preceding claims, **characterised in that** the piston-cylinder arrangements (12) are provided with a housing (19) which is connected in a region of its periphery on the pressure side to the control element (31).

12. Gearbox arrangement as claimed in any one of the preceding claims, **characterised in that** the piston-cylinder arrangements (12) are provided in each case with at least one mechanical actuating means (39) for assisting the movement of the pistons (16) in the direction of the internal geared wheel (13).

13. Gearbox arrangement as claimed in any one of the preceding claims, **characterised in that** the planetary drives (8) of the two axle halves (5) of a driven axle with the allocated hydrostatic device (11) comprising the control element (31) are arranged in the area immediately surrounding an axle power-split gearbox (50) which can be allocated to the axle halves (5).

14. Gearbox arrangement as claimed in any one of the preceding claims, **characterised in that** a differential gear (53) which can be connected via a switching means (55) is arranged on said gearbox arrangement.

15. Gearbox arrangement as claimed in claim 14, **characterised in that** the switching means (55) is provided as a clutch, in particular as a dog clutch or a friction clutch, or as a further hydrostatic device.

## Revendications

1. Système de transmission, qui est disposé dans la chaîne cinématique d'un véhicule terrestre à un ou plusieurs essieux, en particulier d'un véhicule utilitaire, ou d'un moyen de locomotion similaire, parmi lesquels essieux au moins un est entraîné, au moins un train planétaire respectif étant associé aux moitiés d'essieu d'un essieu entraîné, et comprenant au moins un dispositif de capteur pour détecter une manipulation de braquage sur le véhicule, et comprenant un dispositif de commande, les trains planétaires pouvant être commandés au moyen du dispositif de commande à l'aide de valeurs calculées à partir des données de manipulation de braquage, de telle sorte que chacune des roues concernées disposées sur la moitié d'essieu respective soit entraîné à une vitesse de rotation pou laquelle elle roule sans patiner, **caractérisé en ce que** les moitiés d'essieu (5) sont entraînées de manière synchrone sans différentiel et **en ce que** le dispositif de commande (6) comprend un dispositif hydrostatique (11) pouvant être manipulé, au moyen duquel chacune des roues (4) roulant sans patiner conserve son couple.

2. Système de transmission selon la revendication 1, **caractérisé en ce que** le dispositif de commande (6) est pourvu d'au moins un élément de commande (31) pour la commande du circuit d'un moyen de commande hydraulique.

3. Système de transmission selon la revendication 1 ou 2, **caractérisé en ce que** l'au moins un élément de commande (31) est disposé de manière espacée du train planétaire commandé (8).

4. Système de transmission selon l'une quelconque des revendications précédentes, **caractérisé en ce qu'**un organe de commande rotatif (20) de contour fermé est disposé sur le train planétaire (8), lequel organe de commande est pourvu de portions d'organe courbées en alternance de manière convexe et de manière concave, lesquelles forment des cames (21) et des creux de levée (22).

5. Système de transmission selon l'une quelconque des revendications précédentes, **caractérisé en ce que** l'organe de commande (20) du train planétaire (8) est prévu de manière bloquée en rotation en tant que portion axiale annulaire (33) d'un support rotatif (34) dont la rotation entraîne, une pluralité d'ensembles pistoncylindre (12), disposés suivant le même écart angulaire les uns par rapport aux autres, du dispositif hydrostatique (11).

6. Système de transmission selon la revendication 5, **caractérisé en ce que** la portion axiale (33) sur le support (34) est disposée de manière coplanaire ou décalée axialement par rapport à la couronne (13) du train planétaire (8).

7. Système de transmission selon la revendication 6, **caractérisé : en ce que** le support (34) est formé par la couronne (13) ou par un porte-satellite (38).

8. Système de transmission selon l'une quelconque des revendications précédentes, **caractérisé en ce que** des fonds de cylindre (23), opposés au support (34), des ensembles piston-cylindre (12) peuvent être reliés
respectivement par le biais d'une soupape d'aspiration ou de refoulement (24, 25) à un côté d'aspiration et un côté de refoulement respectifs d'un dispositif de transport (30), entourant le boîtier (19), du fluide hydraulique.

9. Système de transmission selon la revendication 8, **caractérisé en ce que** le dispositif de transport (30) est formé par au moins un canal annulaire (26a, 26b) sur le boîtier (19) associé à chaque soupape d'aspiration (24) et un canal annulaire sur le boîtier associé à chaque soupape de refoulement (25) ou par des conduites hydrauliques.

10. Système de transmission selon la revendication 9, **caractérisé en ce que** le canal d'aspiration (26a) est relié à une alimentation basse pression en fluide hydraulique.

11. Système de transmission selon l'une quelconque des revendications précédentes, **caractérisé en ce que** les ensembles piston-cylindre (12) sont pourvus d'un boîtier (19), lequel est relié à l'élément de commande (31) dans une région de sa périphérie sur le côté de refoulement.

12. Système de transmission selon l'une quelconque des revendications précédentes, **caractérisé en ce que** les ensembles piston-cylindre (12) sont pourvus respectivement d'au moins un mécanisme d'actionnement mécanique (39) pour assister le déplacement des pistons (16) en direction de la couronne (13).

13. Système de transmission selon l'une: quelconque des revendications précédentes, **caractérisé en ce que** les trains planétaires (8) des deux moitiés d'essieu (5) d'un essieu entraîné avec le dispositif hydrostatique associé (11) comprenant l'élément de commande (31) sont disposés à proximité immédiate d'une transmission d'essieu à répartition de puissance (50) pouvant être associée aux moitiés d'essieu (5).

14. Système de transmission selon l'une quelconque des revendications précédentes, **caractérisé en ce qu'**un différentiel (53) pouvant être connecté par le biais d'un moyen de commutation (55) est disposé sur celui-ci.

15. Système de transmission selon la revendication 14, **caractérisé en ce que** le moyen de commutation (55) est prévu sous forme d'embrayage, en particulier sous la forme d'un embrayage à griffes ou d'un embrayage à friction, ou sous la forme d'un autre dispositif hydrostatique.
